# FASCICULE DE BREVET EUROPEEN

(11) **EP 2 934 811 B1**
(45) Date de publication et mention de la délivrance du brevet: **18.11.2020**
(21) Numéro de dépôt: 13818304.1
(22) Date de dépôt: 16.12.2013
(51) Int. Cl.: B23K 26/14

(54) **TÊTE ET PROCEDE DE SOUDAGE LASER**
LASERSCHWEISSVERFAHREN UND LASERSCHWEISSKOPF
LASER WELDING METHOD AND LASER WELDING HEAD

(30) Priorité: 19.12.2012 FR 1262368
(43) Date de publication de la demande: 28.10.2015
(73) Titulaire: Safran Helicopter Engines, 64510 Bordes (FR)
(72) Inventeur: CHANTELOUP, Denis, Luc, Alain, F-64110 Gelos (FR); DUBOURDIEU, Jean Marc, F-64230 Mazerolles (FR); LAMAISON, Olivier, F-64121 Montardon (FR); VALLY, Christian, F-64000 Pau (FR)
(74) Mandataire: Cabinet Beau de Loménie
(86) Numéro de dépôt international: PCT/FR2013/053090
(87) Numéro de publication internationale: WO 2014/096653

(56) Documents cités:
- AT-B- 409 602
- DE-C1- 10 017 845
- FR-A1- 2 829 413

## Description

La présente invention concerne le domaine du soudage laser et en particulier une tête de soudage laser, ainsi qu'un procédé de soudage utilisant cette tête.

Le soudage laser est une technique permettant d'assembler plusieurs pièces d'un matériau fusible, et en particulier d'un matériau métallique, grâce à un apport énergétique effectué à travers d'un faisceau laser. Ce faisceau laser, focalisé sur un point focal entre deux pièces adjacentes, chauffe localement le matériau à souder au-delà de son point de fusion, assurant ainsi la soudure des deux pièces sur un plan de joint. Un avancement progressif du point de soudure perpendiculairement à l'axe de focalisation du faisceau laser permet de joindre les pièces adjacentes le long d'une ligne de soudure suivant cet avancement.

Afin d'éviter une oxydation du matériau sur la ligne de soudure, il est connu de la personne du métier d'injecter un gaz protectif inerte, tel que par exemple de l'argon, sur le point focal à travers une buse annulaire située autour de l'axe de focalisation.

Un inconvénient de cette technique est toutefois la dégradation progressive des éléments optiques permettant de diriger et focaliser le laser, et en particulier de la lentille de focalisation en fin de chemin optique. Exposée à un environnement agressif, avec des gaz chauds, poussières, et gouttelettes de métal fondu, cette lentille peut rapidement se dégrader. Or, le coût de ces éléments optiques étant très élevé, leur remplacement fréquent peut sensiblement pénaliser l'utilisation d'un dispositif de soudage laser.

Le placement d'un carreau de protection devant la lentille de focalisation ne permet de résoudre cet inconvénient que de manière très imparfaite. En effet, même si ce carreau présente un coût moindre que celui de la lentille de focalisation, son remplacement fréquent suite à sa propre dégradation continuerait à constituer une charge importante, non seulement à cause de son coût de remplacement, mais aussi à cause de l'arrêt du dispositif de soudage laser que ce remplacement impose.

Il a donc été proposé, par exemple dans la publication de demande de brevet d'invention FR 2 829 413 A1 et dans les brevets AT 409 602 B et DE 100 17 845 C1, de protéger la lentille de focalisation par un courant transversal d'air soufflant devant cette lentille afin d'écarter les gaz chauds, poussières et gouttelettes pouvant autrement dégrader la surface de la lentille de focalisation. Toutefois, l'efficacité de cette technique, généralement connue par le nom anglais de « crossjet », peut être limitée. En particulier si elle est combinée avec l'injection d'un gaz protectif autour de l'axe de focalisation, des interactions aérodynamiques entre le courant transversal d'air et le jet de gaz protectif peuvent déstabiliser le second, exposant le matériau en fusion à une oxydation non désirée.

### Objet et résumé de l'invention

La présente divulgation vise à remédier à ces inconvénients. En particulier elle vise à proposer une tête de soudage laser destinée à être fixée sous une lentille de focalisation du laser et comprenant au moins une buse annulaire pour l'injection d'un gaz protectif, arrangée autour d'un axe optique, et une chambre de protection de la lentille de focalisation par un courant transversal d'air, ayant une admission d'air et un échappement d'air au droit de l'admission d'air dans un plan sensiblement perpendiculaire audit axe optique, permettant néanmoins d'éviter des interactions aérodynamiques néfastes entre le jet de gaz protectif et le courant transversal d'air.

Selon l'invention ce but est atteint grâce au fait que la tête de soudage laser, qui est configurée pour être fixée contre ladite lentille de focalisation sans aucune ouverture latérale entre la lentille de focalisation et ladite chambre de protection, présente une distance d'au moins 100 mm entre une sortie de la buse annulaire et ladite chambre de protection, qu'elle comprend une deuxième buse d'injection de gaz protectif, arrangée derrière la buse annulaire par rapport à un sens d'avancement de la tête de soudage laser, et en ce que l'échappement de ladite chambre de protection est orienté en sens opposé au sens d'avancement de la tête de soudage laser. Ainsi, on continue à protéger de l'oxydation la ligne de soudure encore chaude derrière la tête de soudage laser pendant son avancement, tout en évitant que la tête de soudage laser, dans son avancement, rattrape les turbulences générées par ce courant d'air en aval de l'échappement.

Grâce à ces dispositions, les interactions aérodynamiques négatives entre le courant transversal d'air et le jet de gaz protectif peuvent être minimisées pour mieux éviter l'arrivée de gaz chauds, poussières ou gouttelettes vers la lentille de focalisation à travers la tête de soudage laser ou par l'extérieur.

En particulier, et afin notamment d'alléger la tête de soudage laser pour limiter son inertie et faciliter son actionnement, celle-ci peut présenter au moins une ouverture latérale entre la chambre de protection et la buse annulaire.

Afin notamment d'encore plus séparer le courant d'air sortant par l'échappement de ladite chambre de protection, la tête de soudage laser peut comprendre un déflecteur d'air en aval dudit échappement d'air.

Pour canaliser le courant transversal d'air dans la chambre de protection, tout en offrant une protection supplémentaire à la lentille de focalisation, ladite chambre de protection peut être délimitée en direction axiale par au moins une rondelle annulaire située autour dudit axe optique.

Afin d'obtenir un écoulement homogène en sortie de ladite buse annulaire, celle-ci peut comprendre une chambre de tranquillisation en amont d'une sortie annulaire.

Pour éviter l'entrée de particules liquides ou solides dans cette chambre de tranquillisation, la buse annulaire peut comprendre un passage coudé entre la chambre de tranquillisation et la sortie annulaire. La buse annulaire peut aussi comprendre au moins un diffuseur, alternativement ou en complément à ce passage coudé. En particulier, le passage coudé peut être situé en aval du diffuseur, de manière à aussi protéger ce dernier. Ce diffuseur peut notamment comporter au moins une pièce poreuse ou filtre, par exemple une pluralité de filtres séparés par des entretoises, ou une pièce poreuse. Cette au moins une pièce poreuse ou filtre peuvent être métalliques : ainsi par exemple le diffuseur peut comporter une pièce poreuse en bronze.

Afin, par exemple, de protéger l'appareil de soudage laser de chocs thermiques ou électriques, la tête de soudage laser peut comprendre un élément en matériau thermiquement et/ou électriquement isolant interposé entre la chambre de protection et la buse annulaire.

La deuxième buse d'injection peut notamment être intégrée dans un traînard fixé derrière la tête de soudage laser pour couvrir la ligne de soudure.

La distance entre la sortie de la buse annulaire et la chambre de protection peut être ajustable, permettant ainsi de mieux adapter la tête de soudage laser à des différents paramètres de fonctionnement. La présente divulgation se rapporte également à un procédé de soudage laser utilisant une telle tête de soudage laser, et dans lequel un faisceau laser est focalisé suivant l'axe optique sur un point focal situé sous la buse annulaire, pendant qu'un gaz protectif est injecté autour dudit point focal à travers ladite buse annulaire, qu'un courant transversal d'air dans ladite chambre de protection protège la lentille de focalisation, et que la tête de soudage laser avance dans une direction d'avancement perpendiculaire à l'axe optique.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'une tête de soudage laser suivant un mode de réalisation, installée sur une machine de soudage laser ;
- la figure 2 est une vue du bas de la tête de soudage laser de la figure 1 ;
- la figure 3 est une section longitudinale de la tête de soudage laser des figures 1 et 2, suivant la ligne III-III sur la figure 2 ;
- la figure 4 est une section partielle de la tête de soudage laser des figures 1 et 2, suivant la ligne IV-IV sur la figure 2 ; et
- la figure 5 est une vue de détail d'un déflecteur d'air de la tête de soudage laser de la figure 1.

### Description détaillée de l'invention

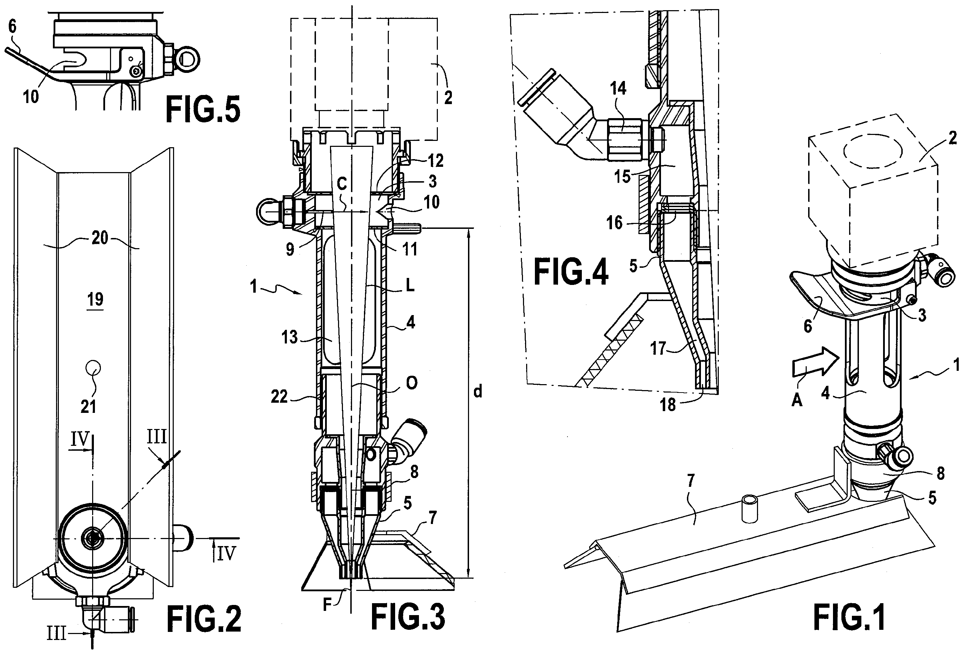

Une tête de soudage laser 1 suivant un mode de réalisation est illustrée sur la figure 1. Cette tête de soudage laser 1 est montée directement sous une source laser 2 qui peut être soutenue de manière mobile et actionnable par un appareil de soudage laser du type à bras articulé, à portique, ou toute autre configuration connue de la personne du métier pour cette application. Cette source laser 2 présente un chemin optique aboutissant, à son extrémité inférieure directement adjacente à la tête de soudage 1, sur une lentille de focalisation (non illustrée). La tête de soudage laser 1 illustrée est fixée directement sous cette lentille de focalisation et comporte trois parties principales : une chambre de protection 3 de la lentille de focalisation par un courant transversal d'air, une cage 4, et une buse annulaire 5 pour l'injection d'un gaz protectif. Deux autres éléments sont fixés sur cette tête de soudage laser 1 : un déflecteur d'air 6 fixé sur la chambre de protection 3, et un traînard 7 fixé à la tête de soudage laser 1 par un collier 8 monté autour de la buse annulaire 5.

Comme l'on peut voir sur la figure 2, le traînard 7 comprend une plaque 19 avec des jupes latérales 20 et une deuxième buse 21 connectable à une source de gaz protectif inerte pressurisé pour l'injection de ce gaz dans l'espace délimité par la plaque 19 et les jupes 20. Une plaque (non illustrée) présentant une pluralité de perforations peut être interposée dans cet espace face à la plaque 19 de manière à former une cavité de tranquillisation et distribuer l'injection du gaz protectif arrivant par la deuxième buse 21 sur une plus grande surface sous la plaque 19.

La figure 3 illustre une coupe longitudinale de la tête de soudage laser 1. On peut voir, sur cette figure, comment la tête de soudage laser 1 présente un axe optique O dégagé, permettant le passage du faisceau laser L focalisé par la lentille de focalisation sur un point focal F.

La chambre de protection 3 est montée directement en dessous de la lentille de focalisation, sans laisser aucune ouverture latérale. Cette chambre de protection 3 présente une admission d'air 9 en forme de fente, pouvant être connectée à une source d'air pressurisé, et un échappement d'air 10 en forme de lunule. L'admission 9 et l'échappement 10 sont arrangés au droit l'un de l'autre dans un plan perpendiculaire à l'axe optique O, de manière à créer un courant transversal laminaire C (« crossjet » en anglais) d'air devant la lentille de focalisation, pour la protéger de gaz chauds, poussières ou gouttelettes pouvant la dégrader. En outre, deux rondelles annulaires 11,12 délimitent axialement cette chambre de protection.

La cage 4 sépare la chambre de protection 3 de la buse annulaire 5 afin de maintenir une distance d d'au moins 100 mm entre elles. La buse annulaire 5 et la cage 4 sont couplées par des filetages complémentaires 22 permettant d'ajuster cette distance d. Cette cage 4 présente des ouvertures latérales 13 oblongues pour son allègement. Elle peut être réalisée, par exemple, en matériau synthétique à base de polymères, ou polymères renforcés, et être électriquement et/ou thermiquement isolante, afin d'isoler la buse annulaire 5 du reste de la tête 1 et l'appareil de soudage laser. L'isolation électrique de la buse annulaire, en particulier, peut permettre l'utilisation d'un système anticollision par détection de charge statique. Cette cage 4 peut être produite, par exemple, par un système de fabrication additive, tel que la stéréolithographie.

La buse annulaire 5 est arrangée autour de l'axe optique O, de manière à permettre le passage du faisceau laser L, et est connectée à une source de gaz protectif inerte pressurisé, par exemple de l'argon, pour l'injecter autour du point focal F, et ainsi isoler lors du soudage le matériau en fusion de substances chimiquement réactives, et notamment de l'oxygène de l'air. Cette buse annulaire 5, qui est illustrée en plus grand détail sur la figure 4, comprend une admission 14 de gaz protectif pressurisé suivie, successivement en aval suivant l'écoulement de ce gaz, d'une chambre de tranquillisation 15, diffuseur 16, un passage coudé 17 et la sortie de buse 18. Dans le mode de réalisation illustré, le diffuseur 16 est formé par plusieurs filtres métalliques successifs, séparés par des entretoises. Ce diffuseur 16 et le passage coudé 17 empêchent la pénétration dans la chambre de tranquillisation de particules solides ou gouttelettes liquides éjectées pendant le soudage laser.

La figure 5 illustre en détail le déflecteur 6. Ce déflecteur 6 est fixé à l'extérieur de la chambre de protection 3, directement en aval de son échappement 10 dans le sens d'écoulement du courant transversal d'air, afin de diriger ce courant d'air loin de la buse annulaire 5 après sa sortie par l'échappement 10, afin de contribuer ainsi à éviter des interférences aérodynamiques entre ce courant d'air et le jet de gaz protectif injecté à travers de la buse annulaire 5.

En fonctionnement, le faisceau laser L, qui peut être continu ou intermittent, chauffe le matériau à souder au point focal F, pendant que l'ensemble formé par la tête de soudage laser 1 et la source laser 2 avance par rapport à ce matériau dans un sens d'avancement A pour ainsi former une ligne de soudure.

La buse annulaire 5 injecte simultanément le gaz protectif inerte autour du point focal F afin notamment d'éviter l'oxydation du matériau en fusion. Le même gaz protectif inerte est injecté aussi, par la deuxième buse 21, sous le traînard 7, lequel est orienté en sens opposé au sens d'avancement par rapport à l'axe optique O. Ainsi, le matériau encore chaud sur la ligne de soudure derrière le point focal L continue à être protégé pendant l'avancement de la tête de soudage laser 1.

En même temps, l'air pressurisé entrant dans la chambre de protection 3 à travers son admission 9 circule transversalement à l'axe optique O vers l'échappement 10, de manière à protéger la lentille de focalisation au sommet de la cavité borgne au-dessus de la chambre de protection 3. L'admission 9 est orientée dans le sens d'avancement A par rapport à l'axe optique O, de manière à ce que ce courant d'air soit expulsé vers l'arrière et vers le haut par le déflecteur 6 en sortant par l'échappement 10, et ainsi minimiser encore les éventuelles interférences aérodynamiques avec le jet de gaz sortant de la buse annulaire 5.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Tête de soudage laser (1) destinée à être fixée sous une lentille de focalisation du laser, configurée pour être fixée contre ladite lentille de focalisation sans aucune ouverture latérale entre la lentille de focalisation et ladite chambre de protection (3), et comprenant au moins :
une buse annulaire (5) pour l'injection d'un gaz protectif, arrangée autour d'un axe optique (0) dégagé traversant la tête de soudage laser (1) ; et
une chambre (3) de protection de la lentille de focalisation par un courant transversal d'air, comportant une admission d'air (9) et un échappement d'air (10) au droit de l'admission d'air (9) dans un plan sensiblement perpendiculaire audit axe optique (0) ;
cette tête de soudage laser (1) étant **caractérisée en ce qu'**elle présente une distance (d) d'au moins 100 mm entre une sortie (18) de la buse annulaire (5) et ladite chambre de protection (3), **en ce qu'**elle comprend une deuxième buse (21) d'injection de gaz protectif, arrangée derrière la buse annulaire (5) par rapport à un sens d'avancement (A) de la tête de soudage laser (1), et **en ce que** ledit échappement d'air (10) est orienté dans un sens opposé au sens d'avancement (A) de la tête de soudage laser (1).

2. Tête de soudage laser (1) suivant la revendication 1, présentant au moins une ouverture latérale (13) entre la chambre de protection (3) et la buse annulaire (5).

3. Tête de soudage laser (1) suivant l'une quelconque des revendications précédentes, comprenant un déflecteur d'air (6) en aval dudit échappement d'air (10).

4. Tête de soudage laser (1) suivant l'une quelconque des revendications précédentes, dans laquelle ladite chambre de protection (3) est délimitée en direction axiale par au moins une rondelle annulaire (11,12) située autour dudit axe optique (0).

5. Tête de soudage laser (1) suivant l'une quelconque des revendications précédentes, dans laquelle ladite buse annulaire (5) comprend une chambre de tranquillisation (15) en amont d'une sortie annulaire (18).

6. Tête de soudage laser (1) suivant la revendication5, dans laquelle ladite buse annulaire (5) comprend un passage coudé (17) entre la chambre de tranquillisation (15) et la sortie annulaire (18).

7. Tête de soudage laser (1) suivant l'une quelconque des revendications précédentes, comprenant un élément (4) en matériau thermiquement et/ou électriquement isolant interposé entre la chambre de protection (3) et la buse annulaire (5).

8. Tête de soudage laser (1) suivant l'une quelconque des revendications précédentes, dans laquelle la distance (d) entre la sortie (18) de la buse annulaire (5) et la chambre de protection (3) est ajustable.

9. Procédé de soudage laser utilisant une tête de soudage laser (1) suivant l'une quelconque des revendications précédentes, dans lequel un faisceau laser (L) est focalisé suivant l'axe optique (0) sur un point focal (F) situé sous la buse annulaire (5), pendant qu'un gaz protectif est injecté autour dudit point focal (F) à travers ladite buse annulaire (5), qu'un courant transversal d'air (C) dans ladite chambre de protection (3) protège la lentille de focalisation, et que la tête de soudage laser (1) avance dans une direction d'avancement perpendiculaire à l'axe optique (0).

## Patentansprüche

1. Laserschweißkopf (1), der dazu bestimmt ist, unter einer Laserfokussierlinse befestigt zu werden, dazu ausgelegt ist, an der Fokussierlinse ohne seitliche Öffnung zwischen der Fokussierlinse und der Schutzkammer (3) befestigt zu werden, und wenigstens umfasst:
eine ringförmige Düse (5) zum Einspritzen eines Schutzgases, die um eine freiliegende optische Achse (O), welche den Laserschweißkopf (1) durchquert, herum angeordnet ist, und
eine Kammer (3) zum Schutz der Fokussierlinse durch einen Querluftstrom, umfassend einen Lufteinlass (9) und einen Luftauslass (10) gegenüber dem Lufteinlass (9) in einer Ebene im Wesentlichen senkrecht zu der optischen Achse (O),
wobei dieser Laserschweißkopf (1) **dadurch gekennzeichnet ist, dass** er einen Abstand (d) von wenigstens 100 mm zwischen einem Auslass (18) der ringförmigen Düse (5) und der Schutzkammer (3) aufweist, dass er eine zweite Düse (21) zum Einspritzen von Schutzgas umfasst, die hinter der ringförmigen Düse (5) in Bezug auf eine Vorschubrichtung (A) des Laserschweißkopfes (1) angeordnet ist, und dass der Luftauslass (10) in einer Richtung entgegengesetzt zu der Vorschubrichtung (A) des Laserschweißkopfes (1) ausgerichtet ist.

2. Laserschweißkopf (1) nach Anspruch 1, der wenigstens einer seitlichen Öffnung (13) zwischen der Schutzkammer (3) und der ringförmigen Düse (5) aufweist.

3. Laserschweißkopf (1) nach einem der vorhergehenden Ansprüche, umfassend ein Luftleitblech (6) stromabwärts des Luftauslasses (10).

4. Laserschweißkopf (1) nach einem der vorhergehenden Ansprüche, wobei die Schutzkammer (3) in axialer Richtung durch wenigstens eine Ringscheibe (11, 12) begrenzt ist, die um die optische Achse (O) herum gelegen ist.

5. Laserschweißkopf (1) nach einem der vorhergehenden Ansprüche, wobei die ringförmige Düse (5) eine Beruhigungskammer (15) stromaufwärts eines ringförmigen Auslasses (18) umfasst.

6. Laserschweißkopf (1) nach Anspruch 5, wobei die ringförmige Düse (5) einen abgewinkelten Durchgang (17) zwischen der Beruhigungskammer (15) und dem ringförmigen Auslass (18) umfasst.

7. Laserschweißkopf (1) nach einem der vorhergehenden Ansprüche, umfassend ein Element (4) aus thermisch und/oder elektrisch isolierendem Material, das zwischen der Schutzkammer (3) und der ringförmigen Düse (5) angeordnet ist.

8. Laserschweißkopf (1) nach einem der vorhergehenden Ansprüche, wobei der Abstand (d) zwischen dem Auslass (18) der ringförmigen Düse (5) und der Schutzkammer (3) einstellbar ist.

9. Verfahren zum Laserschweißen unter Verwendung eines Laserschweißkopfes (1) nach einem der vorhergehenden Ansprüche, bei dem ein Laserstrahl (L) entlang der optischen Achse (O) auf einen unter der ringförmigen Düse (5) gelegenen Brennpunkt (F) fokussiert wird, während ein Schutzgas um den Brennpunkt (F) herum durch die ringförmige Düse (5) eingespritzt wird, ein Querluftstrom (C) in der Schutzkammer (3) die Fokussierlinse schützt und der Laserschweißkopf (1) in einer Vorschubrichtung senkrecht zu der optischen Achse (O) vorwärts schreitet.

## Claims

1. A laser welding head (1) for fastening under a focusing lens for focusing the laser, configured to be fastened against said focusing lens without any lateral opening between the focusing lens and said protective chamber (3), and comprising at least:
• an annular nozzle (5) for injecting a protective gas and arranged around an unobstructed optical axis (O) passing through the laser welding head (1); and
• a protective chamber (3) for protecting the focusing lens by means of a transverse flow of air, the chamber having air admission (9) and air exhaust (10) in register with the air admission (9) in a plane that is substantially perpendicular to said optical axis (O);
this laser welding head (1) being **characterized in that** it is, and **in that** it presents a distance (d) of at least 100 mm between an outlet (18) of the annular nozzle (5) and said protective chamber (3), **in that** it comprises a second nozzle (21) for injecting protective gas, arranged behind the annular nozzle (5) relative to a direction of advance (A) of the laser welding head (1), and **in that** said air exhaust (10) is oriented in a direction opposite from the direction of advance (A) of the laser welding head (1).

2. A laser welding head (1) according to claim 1, presenting at least one lateral opening (13) between the protective chamber (3) and the annular nozzle (5).

3. A laser welding head (1) according to either preceding claim, including an air deflector (6) downstream from said air exhaust (10).

4. A laser welding head (1) according to any preceding claim, wherein said protective chamber (3) is defined in an axial direction by at least one annular washer (11, 12) situated around said optical axis (O).

5. A laser welding head (1) according to any preceding claim, wherein said annular nozzle (5) includes a plenum chamber (15) upstream from an annular outlet (18).

6. A laser welding head (1) according to claim 5, wherein said annular nozzle (5) includes a bent passage (17) between the plenum chamber (15) and the annular outlet (18) .

7. A laser welding head (1) according to any preceding claim, including an element (4) made of thermally and/or electrically insulating material interposed between the protective chamber (3) and the annular nozzle (5).

8. A laser welding head (1) according to any preceding claim, wherein the distance (d) between the outlet (18) from the annular nozzle (5) and the protective chamber (3) is adjustable.

9. A laser welding method using a laser welding head (1) according to any preceding claim, wherein a laser beam (L) is focused along the optical axis (O) on a focal point (F) situated under the annular nozzle (5), while a protective gas is injected around said focal point (F) through said annular nozzle (5), while a transverse flow of air (C) in said protective chamber (3) protects the focusing lens, and while the laser welding head (1) is advancing along a direction of advance perpendicular to the optical axis (O).
